# EUROPEAN PATENT APPLICATION

(11) **EP 2 138 212 A1**
(43) Date of publication of application: **30.12.2009**
(21) Application number: 08159298.2
(22) Date of filing: 27.06.2008
(51) Int. Cl.: A63F 13/12, G06T 7/00

(54) **Method for assessing the direction of a user device provided with a camera**

(71) Applicant: Nederlandse Organisatie voor toegepast-natuurwetenschappelijk onderzoek TNO, 2628 VK Delft (NL)
(72) Inventor: Stokking, Hans Maarten, 2545 HK Den Haag (NL); Klos, Victor Bastiaan, 2498 BV Den Haag (NL); Walraven, Fabian Arthur, 9711 VM Groningen (NL)
(74) Representative: Hatzmann, Martin

(57) **Abstract**

Method for assessing the direction of a first user device (1) provided with a camera, relative to the positions of one or more other user devices (2) by using localization means (5) which are arranged to assess the positions of all relevant user devices (1, 2), each user device having an identifier assigned to it or its user and transmission means, and each user device, moreover, being held by either a person or by a vehicle, hereinafter called user (3). The positions of all relevant user devices, linked to their individual identifiers, are registered e.g. in a server. The camera of the first user device is aimed to a subset of all other users, enabling the camera to pick up the visual user marks of those users. The camera is then activated to make an image of those users and to transmit it to the server. Then the server tries to match the received image with the registered positions of all relevant devices, resulting in the direction information of the first user device relative to the positions of one or more of the user devices held by the subset of all other users. The method may be performed in e.g. a virtual shooting game, wherein, if the first user device is aimed at a position that matches the position of at least one other user in some predefined degree of precision and the first user device is activated to give a virtual shoot command to a game server, this shoot command is assigned to be successful.

## Description

This invention refers to a method for assessing the direction of a first user device provided with a camera, relative to the positions of one or more other user devices.

The invention is in particular aimed at virtual action or shooting games, however, other (more serious) applications are envisaged, e.g. in the area of civil or military services etc.

The invention may be seen as a modernized version of the use of a conventional rifle: first such rifle will be moved roughly into the direction of the supposed object to be shot, after which the direction will be "fine tuned" to the object by using a bead & sight type target finder.

Instead of that, according to the invention use is made of the features of nowadays mobile telephone terminals, like terminal localization (positioning), image/video camera, Internet, downloadable software applications etc.

In a method according to the invention for assessing the direction of a first user device provided with a camera, relative to the positions of one or more other user devices (with or without camera), use is made of localization means which are arranged to assess the positions of all relevant user devices, each user device having an identifier assigned to it or its user and transmission means, and each user device, moreover, being held by either a person or by a vehicle, hereinafter called user, and each user having general or specific visual user marks which can be recorded by said camera. The general user marks may e.g. be the characteristics of the general shape of a human body, a human face etc. Specific user marks may e.g. be formed by special signs on the users' clothes and the like.

Preferrably, the method comprises next steps:
- the positions of all relevant user devices, linked to their individual identifiers, are registered;
- the camera of the first user device is aimed to a subset of all other users, enabling the camera to pick up the visual user marks of those users;
- the camera is activated to make an image of those users;
- the image is matched with the registered positions of all relevant devices, resulting in the direction information of the first user device relative to the positions of one or more of the user devices held by the subset of all other users.

In particular in view of "shooting" or similar applications it may be preferred that the assessed direction information is displayed at (a display of) the first user device. Besides, the method may include to assess whether the direction in which the first user device is aimed at, matches the position of at least one other user in some predefined degree of precision. If - e.g. in a shooting game - the first user device is aimed at a position that matches the position of at least one other user in some predefined degree of precision and the first user device may be activated to give a virtual "shoot" or activation command to e.g. a game server, this shoot command is assigned to be successful.

The several actions included in the method according to the invention may be performed e.g. by a server and/or by (e.g. distributed over) the relevant user device(s).

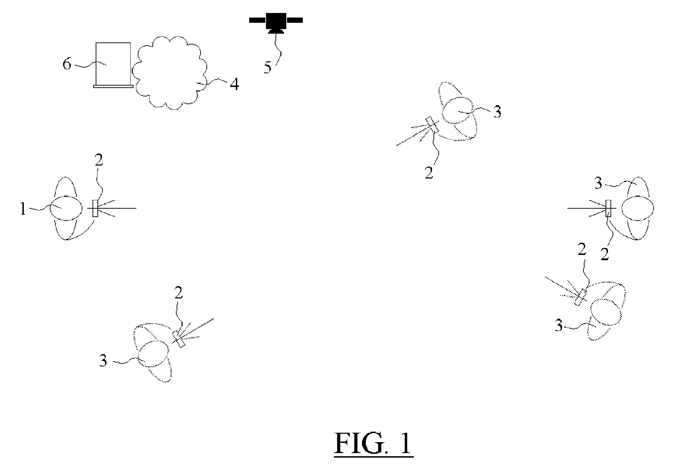

The invention now will be elucidated referring to figure 1.

Figure 1 shows a system which can be used to perform the method according to the invention for assessing the direction of a first user device 1 provided with a camera, relative to the positions of other user devices 2 by using localization means 4 which are arranged to assess the positions of all relevant user devices 1, 2. Each user device 1, 2 has an identifier ID assigned to it or its user 3 and transmission means 4 (the devices may be modern mobile telephones including photo/video cameras). Each user device is held by a person in this example, but (some) could be mounted to some kind of vehicle. Each user (person or vehicle) has general or specific visual user marks which can be recorded by said camera; simply said, the camera, together with a recognition function / server, has to be able to recognize users within the recorded picture. According to the method according to the invention next steps are performed.

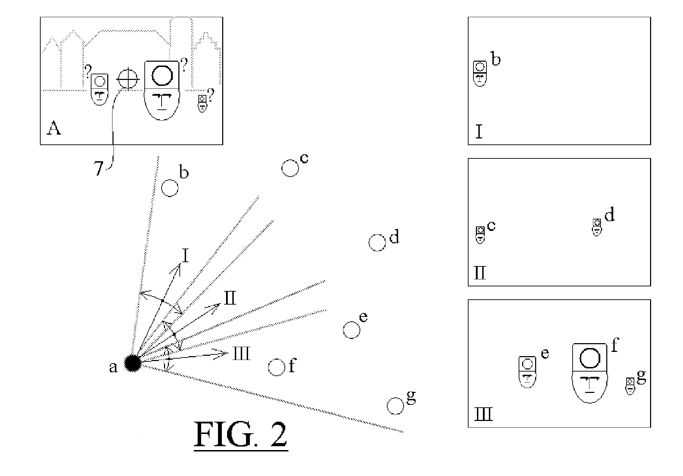

The positions, assessed by the localization means - e.g. a public GPS system, represented in figure 1 by satellite 5, but which also e.g. may be formed by an (indoor) WLAN or Bluetooth etc. based positioning system - of all relevant user devices 1, 2, linked to their individual identifiers ID, are registered in a server 6; e.g., at a certain moment the various users (i.e. user devices) may be located at the Market at Delft, while playing a game, which is illustrated in figure 2. At a certain moment the GPS may detect that the users' positions are (the users/user device are characterized by their identifiers ID(a) etc.):

| | |
|---|---|
| ID(a) | 52°00'40.61" N - 04°21'35.49" E |
| ID(b) | 52°00'42.47" N - 04°21'32.39" E |
| ID(c) | 52°00'42.22" N - 04°21'35.69" E |
| ID(d) | 52°00'42.51" N - 04°21'36.44" E |
| ID(e) | 52°00'41.74" N - 04°21'31.42" E |
| ID(f) | 52°00'42.34" N - 04°21'37.45" E |
| ID(g) | 52°00'40.35" N - 04°21'38.29" E |

When the user (a) of (first) user device 1, tries to shoot another user, he/she aims the camera of his/her user device to a subset of all other users, e.g. (see figure 2) to the three users having ID(e), ID(f) and ID(g) respectively, enabling the camera to pick up the visual user marks of those users; in other words, user 1 aims his/her camera to the area where three possible "adversaries" are located. User 1 activates his/her camera to make an image of those users (having identifiers ID(e), ID(f), ID(g)) and to transmit the image to the server 6.

Note: The subset of all other users could be empty, viz. when no users are visible at the image. However, even when the subset of other users in the image taken by user (a) would be empty, the direction of the camera of user (a) could be determined when there is only one direction in which user (a) could have made an empty image. Also, even if making an empty image could have been possible in multiple directions, this still will give some level of information which can be used (by "history tracking") for future direction assessment.

Next the server 6 tries to make a match between the received image and the registered (at that moment) positions of all relevant devices 1 (a) and 2 (b - g). The matching operation e.g. includes:
- recognizing/detecting in the received image (A) the presence of the users (e, f, g), who e.g. may be provided with special markings for better recognition, e.g. - as in figure 2 - headwear having a recognition mark, "O";
- generating (computing) various artificial images (I, II, III) from the view point of the first device 1 (a), using the location information of all users (b - g): figure 2 illustrates that artificial images II and III are generated by, starting from the location of device 1 (a), calculating artificial images into several viewing directions around the position of user device 1 (a) and taking into account the mutual positions (and thus their mutual distances) to the other users (b-g). This process could still be improved by taking into account the "history" of the various user positions, from which the various user movements could be derived;
- comparing the received image (A) with all images which could have be made by user 1, i.e. the artificial images I - III. As can seen in figure 2 image III, i.e. the artificial image into direction III (see arrows), matches with the ("real") image (picture) A made by user 1(a). As the coordinates of all users (including the "shooting" user a) are exactly known, the direction III in which the real image A had been shot, is known between rather narrow borders. Moreover, the identities of (and additional information about) the users within image A (indicated with "?") can easily be retrieved by the server, and - via a downstream connection - be transmitted to the user device 1 and displayed at his/her device. After that user 1 may adjust his/her device so that e.g. a target finder 7 (sight)projected at the display 8, is brought over the image of one of the other users (e, f, g) and can be (virtually) fired by means of one of the device buttons (not shown).

Below, a more detailed example of the matching process will be given.

In figure 2 degree values are assigned to all directions, e.g. 0° points straight to the top of the figure (y-axis), 90° to the right (X-axis), 180° points straight downward and 270° to the left. All relative positions of the users (b - g) to the shooting user (a) can expressed in degrees, using the users' position information and applying trigonometry. So, suppose the other users (b - g) have the following degrees assigned to them: b = 10° , c = 45° , d = 70° , e = 85° , f = 95° and g = 105°

Next step defines possible pictures, e.g. by starting at 0 degrees and shifting the direction clockwise by 1° resulting into 360 possible pictures. To define possible pictures, the angle wide of the camera lens will be needed. For a normal camera this is 50 degrees, for wide-angle lenses this is more and for telelenses this is less. So, a possible picture is defined by the angles of the other users in the picture, and possibly the height of these other users (the longer the distance, the smaller the user in the image, as is expressed in figure 2 by the larger and smaller faces of the users (b - g) ). The height can be defined by e.g. dividing the vertical axis in degrees in a manner similar to the horizontal direction, and then defining a user's height as the degrees between his/her feet and head..

So, if a camera is used with a 40° angle lens, the 3 possible pictures displayed in figure 2 may look like this:
(U1D) = direction of user 1, U1H = height of user 1, all expressed in °)
picture I: (U1D = 3°, U1H = 5°)
picture II: (U1D = 4°, U1H = 3°, U2D = 39°, U2H = 3°)
picture III: (U1D = 16°, U1H = 7°, U2D = 26°, U2H = 10°, U3D = 36°, U3H = 3°)

So, now the actual image taken by the camera can be defined. Because the actual position measured is that of the device, the algorithm needs some margin in the horizontal direction. Because the height of the users is not known, here also some margin is needed because the actual height of user can vary. This also depends on which height is used: a person's height, the height of a face, or of a vehicle, etc. So, one way of determining the actual direction of the shooting user is to try and find a match between the image taken by user (a) and possible pictures. In this case, using only horizontal direction information will already find that picture III is a match for the actual image. If II images would have been more or less equal, i.e. both would have been a match given the margin used, then, the height information of the users can be used to distinguish between the two.

## Claims

1. Method for assessing the direction of a first user device (1) provided with a camera, relative to the positions of one or more other user devices (2) by using localization means (5) which are arranged to assess the positions of all relevant user devices (1, 2), each user device having an identifier assigned to it or its user and transmission means, and each user device, moreover, being held by either a person or by a vehicle, hereinafter called user, and each user having general or specific visual user marks which can be recorded by said camera, the method comprising next steps:
- the positions of all relevant user devices, linked to their individual identifiers, are registered;
- the camera of the first user device is aimed to a subset of all other users, enabling the camera to pick up the visual user marks of those users;
- the camera is activated to make an image of those users;
- the image is matched with the registered positions of all relevant devices, resulting in the direction information of the first user device relative to the positions of one or more of the user devices held by the subset of all other users.

2. Method according to claim 1, wherein the assessed direction information is displayed at the first user device.

3. Method according to claim 2, including assessing whether the direction in which the first user device is aimed at, matches the position of at least one other user in some predefined degree of precision.

4. Method according to claim 3, performed in some kind of virtual shooting game, wherein, if the first user device is aimed at a position that matches the position of at least one other user in some predefined degree of precision and the first user device is activated to give a virtual shoot command to e.g. a game server, this shoot command is assigned to be successful.

5. System which is arranged to perform the method according to one or more preceding method claims.

6. Software means arranged to control and/or perform the method according to one or more preceding method claims.
